# EUROPÄISCHE PATENTSCHRIFT

(11) **EP 3 970 473 B1**
(45) Veröffentlichungstag und Bekanntmachung des Hinweises auf die Patenterteilung: **09.07.2025**
(21) Anmeldenummer: 21189348.2
(22) Anmeldetag: 03.08.2021
(51) Int. Cl.: A01F 7/06, A01F 12/10

(54) **MÄHDRESCHER MIT ABSCHEIDEVORRICHTUNG**
COMBINE HARVESTER WITH SEPARATING DEVICE
MOISSONNEUSE-BATTEUSE POURVUE DE DISPOSITIF DE COUPE

(30) Priorität: 22.09.2020 DE 102020124661
(43) Veröffentlichungstag der Anmeldung: 23.03.2022
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Bußmann, Jens, 49179 Ostercappeln (DE)
(74) Vertreter: CLAAS Gruppe

(56) Entgegenhaltungen:
- EP-B1- 0 085 358
- EP-B1- 0 230 276
- EP-B1- 2 364 587
- DE-A1- 102016 124 582
- US-A1- 2010 291 982
- US-A1- 2015 038 201

## Beschreibung

### Mähdrescher mit Abscheidevorrichtung

Die Erfindung betrifft einen Mähdrescher mit einer Abscheidevorrichtung, die zumindest ein paar parallel nebeneinander angeordnete Axialrotoren umfasst, und mit einer der Abscheidevorrichtung vorgeordneten Zuführtrommel gemäß dem Oberbegriff des Anspruchs 1 (DE 10 2016 124582 A1).

Derartige Mähdrescher umfassen häufig zwei nach dem Axialflussprinzip arbeitende, parallel zueinander angeordnete Axialrotoren. Den Axialrotoren ist ein Dreschwerk prozesstechnisch vorgeordnet. Das Dreschwerk weist in aller Regel eine Dreschtrommel und eine zwischen der Dreschtrommel und den Axialrotoren angeordnete Zuführtrommel auf. Mittels der Dreschtrommel wird ein von einem Feldbestand aufgenommener Erntegutstrom zunächst bearbeitet und anschließend über die Zuführtrommel den Axialrotoren in zwei Teilströmen zugeführt, wobei jeweils ein Teilstrom jeweils einem der Axialrotoren zugeführt wird. Weiterhin umfasst das Dreschwerk in aller Regel eine der Dreschtrommel vorgeordnete Beschleunigungstrommel, die zur Beschleunigung des Ernteguts dient und den Erntegutstrom der Dreschtrommel zuführt.

Die Zuführtrommel stößt bei der Aufteilung des Erntegutstroms in zwei Teilströmen in schweren Gutflussbedingungen, insbesondere durch Erntegut mit langen Halmen, an ihre Grenzen. Dies resultiert in einer erhöhten Leistungsaufnahme der Arbeitsorgane des Dreschwerks. Die Beschleunigungstrommel und die Zuführtrommel können jeweils mittels eines Riementriebs trieblich mit der Dreschtrommel verbunden sein, sodass ein Drehmoment von der Dreschtrommel über einen Riemen auf die Beschleunigungstrommel und über einen weiteren Riemen ein Drehmoment auf die Zuführtrommel übertragen wird. Bei einer übermäßigen Belastung der Zuführtrommel oder der Beschleunigungstrommel kann übermäßiger Verschleiß des jeweiligen Riemens auftreten oder der jeweilige Riemen reißen. Zur Unterstützung der Aufteilung des Erntegutstroms in die zwei Teilströme ist es deshalb bekannt, dass ein Messer im Einlaufbereich der Axialrotoren platziert wird, wobei das Messer auf den Erntegutstrom in einem mittig den Axialrotoren vorgeordneten Bereich wirkt und vorzugsweise in diesem Bereich befindliches langhalmiges Stroh zerschneidet. Ein derartige Messer ist in der EP201 75334 beschrieben. Nachteilig an der EP201 75334 ist, dass diese keinen Aktor aufweist, wobei mittels des Aktors das Messer automatisch verstellbar ist, sodass auf sich ändernde Gutflussbedingungen kurzfristig reagiert werden kann. Ein händisches Verstellen der Messerposition mittels einer mechanischen Verschwenkvorrichtung ist zeitaufwendig und kann als lästig sowie störend empfunden werden. Weiterhin ist eine Anpassung der Messerposition an die Gutflussbedingungen hinsichtlich des Messerverschleißes besonders zweckmäßig.

Es ist deshalb Aufgabe der Erfindung, die beschriebenen Nachteile des Stands der Technik zu vermeiden und insbesondere einen Mähdrescher mit einer Abscheidevorrichtung, die zumindest ein Paar parallel zueinander angeordnete Axialrotoren umfasst, zu schaffen, der zur Unterstützung der Auftrennung eines den Axialrotoren zuzuführenden Erntegutstroms ein Trennelement aufweist, dessen Position an die vorherrschenden Gutflussbedingungen anpassbar ist.

Diese Aufgabe wird erfindungsgemäß durch die kennzeichnenden Merkmale des Anspruchs 1 gelöst.

Gemäß dem Anspruch 1 wird ein selbstfahrender Mähdrescher mit einer Abscheidevorrichtung vorgeschlagen, die zumindest ein Paar parallel nebeneinander angeordnete Axialrotoren umfasst, und mit der Abscheidevorrichtung vorgeordneten Gutbearbeitungsorganen, die zumindest eine Zuführtrommel zum Zuführen eines Erntegutstroms in die Abscheidevorrichtung aufweisen, wobei in einem der Abscheidevorrichtung vorgeordneten Einlaufbereich ein Trennelement, insbesondere Messer, zur Unterstützung einer Auftrennung des Erntegutstroms in zwei Teilströme schwenkbeweglich angeordnet ist. Erfindungsgemäß ist vorgesehen, dass ein Aktor zum Verschwenken des Trennelements eingerichtet und vorgesehen ist, wobei eine Steuerungseinrichtung in Abhängigkeit eines Lastzustands zumindest eines der Gutbearbeitungsorgane den Aktor automatisch derart ansteuert, sodass bei einer hohen an dem zumindest einen Gutbearbeitungsorgan anliegenden Last sich das Trennelement in einer ersten Position und bei einer niedrigen an dem zumindest einen Gutbearbeitungsorgan anliegenden Last sich das Trennelement in einer zweiten Position befindet, wobei ein Abstand des Trennelements zur Zuführtrommel in der ersten Position kleiner als in der zweiten Position ist.

Die Erfindung hat viele Vorteile. Eine hohe an einem Gutbearbeitungsorgan anliegende Last, insbesondere eine hohe an der Zuführtrommel anliegende Last, ist häufig durch einen Erntegutstrom mit einem großen Anteil an langhalmigen Erntegut bedingt, wobei das langhalmige Erntegut die Aufteilung in die den Axialrotoren zuzuführende Teilströme behindert und sich das Erntegut deshalb vor der Abscheidevorrichtung aufstaut. Der geringe Abstand des Trennelements in einem derartigen Lastzustand führt nun dazu, dass das Trennelement weit in den Erntegutstrom hineinragt und die Halme des Ernteguts in einem vor der Abscheidevorrichtung befindlichen Bereich durchtrennt. Eine Aufteilung des Erntegutstroms wird somit durch des Trennelement unterstützt. Bei der Bearbeitung eines Feldes kann abschnittsweise langhalmiges Erntegut auftreten, sodass lediglich in solchen Abschnitten eine Unterstützung der Auftrennung des Erntegutstroms durch das Trennelement erforderlich ist. Um übermäßigen Verschleiß des Trennelements zu verhindern ist es besonders vorteilhaft, dass das Trennelement außerhalb der Feldabschnitte mit großen Anteil an langhalmigen Erntegut weniger weit in den Erntegutstrom hineinragt bzw. einen größeren Abstand zur Zuführtrommel aufweist. Dies wird durch die automatische lastzustandsabhängige Ansteuerung des Aktors gewährleistet. Die automatische Ansteuerung des Aktors entlastet hierbei einen Fahrzeugführer.

Bevorzugt kann der Aktor als doppeltwirkender Hydraulikzylinder ausgebildet sein.

In einer vorteilhaften Ausgestaltung kann das Trennelement von der ersten Position hin zu der zweiten Position stufenlos mittels des Aktors verstellbar sein, wobei das Trennelement in der ersten Position zumindest teilweise in den Erntegutstrom hineinragt und in der zweiten Position vollständig aus dem Erntegutstrom herausgeschwenkt ist. Dies ist besonders vorteilhaft, da der Verschleiß des Trennelements in einem Lastzustand mit niedriger Last minimiert wird.

Vorzugsweise weist der Mähdrescher einen Riementrieb zum Antrieb des zumindest einen Gutbearbeitungsorgans und eine Sensoreinrichtung auf, wobei die Sensoreinrichtung zum ermitteln des Lastzustands des zumindest einen Gutbearbeitungsorgans in Abhängigkeit einer Riemenspannung eingerichtet und vorgesehen ist, wobei vorzugsweise die Sensoreinrichtung derart eingerichtet ist, sodass diese die Riemenspannung anhand einer Position eines an dem Riemen anliegenden Elements, insbesondere der Position einer an dem Riemen anliegenden Spannrolle ermittelt. Bei einer zunehmenden Last an dem Gutbearbeitungsorgan nimmt die Riemenspannung im Leertrum ab. Eine Spannrolle wird gegen den Riemen gepresst, sodass der Riemen mit einer im Wesentlichen konstanten Spannung beaufschlagt ist. Die Position der Spannrolle ist somit von dem Lastzustand des Gutbearbeitungsorgans abhängig. Die Position lässt sich auf einfache Art und Weise mittels eines Sensors bestimmen und einen Lastzustand zuordnen.

In einer vorteilhaften Ausgestaltung kann in der Steuerungseinrichtung ein Schwellwert und ein Zeitintervall einstellbar und/oder voreingestellt sein, wobei die Steuerungseinrichtung den Aktor derart ansteuert, sodass das Trennelement ausgehend von der zweiten Position in die erste Position verschwenkt wird, sobald der Schwellwert über eine dem Zeitintervall entsprechenden Dauer überschritten wird, und bei einem unterschreiten des Schwellwerts über eine dem Zeitintervall entsprechende Dauer das Trennelement ausgehend von der ersten Position in die zweite Position verschwenkt wird. Dadurch, dass der Schwellwert zunächst eine durch das Zeitintervall definierte Dauer unter- oder überschritten werden muss, bevor eine Veränderung der Position des Trennelements erfolgt, kann ein hektisches hin- und herschwingen des Trennelements bei kurzzeitigen Lastspitzen vermieden werden. Ein voreingestellter Schwellwert und das Zeitintervall können bevorzugt von dem Fahrzeugführer verstellt werden, um diese an die Erntegutbedingungen oder verschiedene Fruchtarten anzupassen.

Besonders vorteilhaft ist es, wenn der Aktor manuell und automatisch ansteuerbar ist. Hierbei kann der lastzustandsabhängigen automatischen Ansteuerung des Aktors zusätzlich eine manuelle Ansteuerung des Aktors übergeordnet sein, wobei bei der manuellen Ansteuerung ein Fahrzeugführer die Position des Trennelements einstellt.

In einer vorteilhaften Weiterbildung kann zur manuellen Ansteuerung des Aktors ein Fahrzeugführer eine Steuervorgabe vorgeben, wobei die Steuervorgabe vorzugsweise eine Auswahl zwischen der ersten Position und der zweiten Position umfasst. Der Fahrer kann somit händisch die Position des Trennelements auf einfache Art und Weise ansteuern, sobald er ein unruhiges Laufverhalten der Gutbearbeitungsorgane bemerkt.

Vorzugsweise kann der Mähdrescher eine Haltevorrichtung und eine Verschwenkeinrichtung aufweisen, wobei die Haltevorrichtung das Trennelement haltert, wobei die Verschwenkvorrichtung zum Verschwenken der Haltevorrichtung eingerichtet ist und mit dem Aktor zusammenwirkt. Ein haltern des Trennelements mittels einer Haltevorrichtung ermöglicht es das Trennelement auf einfache Art und Weise lösbar zu haltern.

Um ein Auswechseln des Trennelements zu erleichtern, können die Haltevorrichtung und das Trennelement abschnittsweise komplementär zueinander ausgebildet sein, wobei das Trennelement mittels eines lösbaren Befestigungselements, insbesondere Schraube, Bolzen oder Splint, in der Haltevorrichtung fixiert ist.

Bevorzugt kann die Abscheidevorrichtung ein Einlaufkopfgehäuse aufweisen und die Axialrotoren mit einem ersten Ende abschnittsweise in das Einlaufkopfgehäuse hineinragen, wobei die Haltevorrichtung schwenkbeweglich an dem Einlaufkopfgehäuse angeordnet ist. Hierdurch kann das Trennelement auf einfache Art und Weise in den Erntegutstrom geschwenkt werden, um die Auftrennung in zwei Teilströme zu unterstützen.

Vorzugsweise kann die Verschwenkvorrichtung zumindest einen ersten Hebelarm und eine Welle umfassen, wobei der erste Hebelarm verdrehfest auf der Welle angeordnet ist und der erste Hebelarm an seinem der Welle abgewandten Ende an der Haltevorrichtung angeordnet ist. Somit kann das Trennelement mittels einer Drehbewegung der Welle verschwenkt werden.

In einer vorteilhaften Weiterbildung kann sich die Welle quer zu einer Längsseite des Mähdreschers erstrecken und der Aktor in kraftübertragender Weise an einem der Längsseite zugewandten Ende mit der Welle in Wirkverbindung stehen. Dies ist besonders vorteilhaft, da der Aktor beabstandet von dem Erntegutstrom angeordnet ist, sodass im Falle einer Leckage eines als Hydraulikzylinder ausgebildeten Aktors keine Hydraulikflüssigkeit in das Erntegut gelangt.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: einen Ausschnitt eines Mähdreschers mit einem Dreschwerk und einer Abscheidevorrichtung in einer schematischen Seitenansicht;
- Figur 2a: eine schematische Seitenansicht einer Dreschtrommel, einer Zuführtrommel und eines Einlaufkopfgehäuses mit einem in den Erntegutstrom eingeschwenkten Trennelement;
- Figur 2b: eine schematische Seitenansicht einer Dreschtrommel, einer Zuführtrommel und eines Einlaufkopfgehäuses mit einem aus den Erntegutstrom herausgeschwenkten Trennelement;
- Figur 3: eine Frontansicht eines Einlaufkopfgehäuses;

- Figur 4: eine Rückansicht eines Einlaufkopfgehäuses mit einem schwenkbeweglichen Trennelement;
- Figur 5: eine Seitenansicht eines Riementriebs, wobei der Riementrieb die Dreschtrommel und Zuführtrommel trieblich verbindet, und eine schematisch dargestellte Sensoreinrichtung zur Ermittlung eines Lastzustands der Zuführtrommel sowie eine Steuerungseinrichtung zur Ansteuerung eines Aktors.

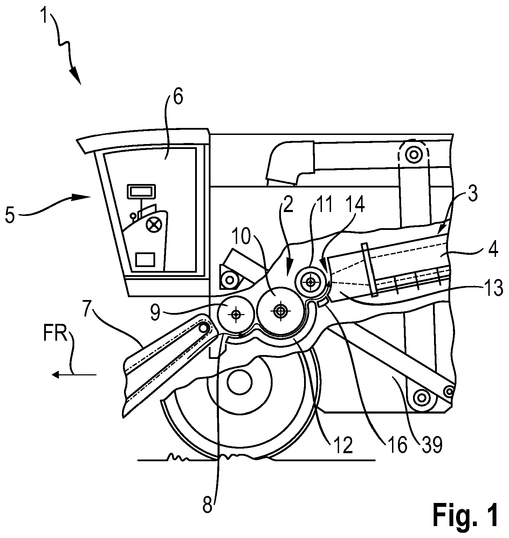

Figur 1 zeigt einen Ausschnitt eines Mähdreschers 1 mit einem Dreschwerk 2 und einer Abscheidevorrichtung 3 in einer schematischen Seitenansicht. Die Abscheidevorrichtung 3 umfasst zwei parallel nebeneinander angeordnete Axialrotoren 4, wobei in der hier gezeigten schematischen Darstellung lediglich der in Fahrtrichtung FR auf der linken Fahrzeugseite befindliche Axialrotor 4 erkenntlich ist.

Der Mähdrescher 1 weist eine Frontseite 5 auf, an der eine Fahrerkabine 6 für einen Bediener (nicht gezeigt) angeordnet ist. An der Frontseite 5 ist zudem ein Schneidwerk (nicht gezeigt) angeordnet, welches Erntegut (nicht gezeigt) aufnimmt. Das Schneidwerk leitet das Erntegut in einen unterhalb der Fahrerkabine angeordneten Schrägförderer 7, über den das Erntegut als Erntegutstrom 8 in das Dreschwerk 2 des Mähdreschers 1 geleitet wird.

Das Dreschwerk 2 weist im dargestellten Ausführungsbeispiel drei Gutbearbeitungsorgane 9, 10, 11 auf, nämlich eine Beschleunigungstrommel 9, die einer Dreschtrommel 10 vorgeordnet ist, die Dreschtrommel 10 sowie eine der Dreschtrommel 10 nachgeordnete Zuführtrommel 11. Die Beschleunigungstrommel 9 ist zum Beschleunigen und zum Vordreschen des Ernteguts sowie zum Zuführen des Ernteguts zur Dreschtrommel 10 vorgesehen. Die Dreschtrommel 10 drischt das Erntegut. Die Gutbearbeitungsorgane 9-11 des Dreschwerks 2 sind quer zur Fahrtrichtung FR angeordnet. Unterhalb der Beschleunigungstrommel 9 und der Dreschtrommel 10 ist ein Dreschkorb 12 angeordnet. Durch den Dreschkorb 12 wird gelöstes Korn (nicht gezeigt) aus dem Erntegutstrom 8 abgeschieden.

Die Zuführtrommel 11 übergibt das Erntegut einem dieser nachgeordneten Einlaufkopfgehäuse 13 der Abscheidevorrichtung 3, wobei das Einlaufkopfgehäuse 13 einen Einlaufbereich 14 für das von der Zuführtrommel 11 hin zu den Axialrotoren 4 geförderte Erntegut formt. Die Axialrotoren 4 sind an einem frontseitigen Einlaufende am Einlaufkopfgehäuse 13 gelagert. Die Zuführtrommel 11 ist als Trenntrommel ausgebildet, die den Erntegutstrom 8 in zwei Teilströme 15 unterteilt, die jeweils einem der beiden Axialrotoren 4 zugeführt werden. Weiterhin kann unterhalb der Zuführtrommel 11 zusätzlich ein Einlaufsegment 16 angeordnet sein. Das Einlaufsegment 16 weist einen gegenüber der Zuführtrommel 11 größeren Durchmesser auf und umgibt die Zuführtrommel 11 zumindest teilweise. Es bildet eine Verlängerung des Einlaufbereichs 14 in die Abscheidevorrichtung 4.

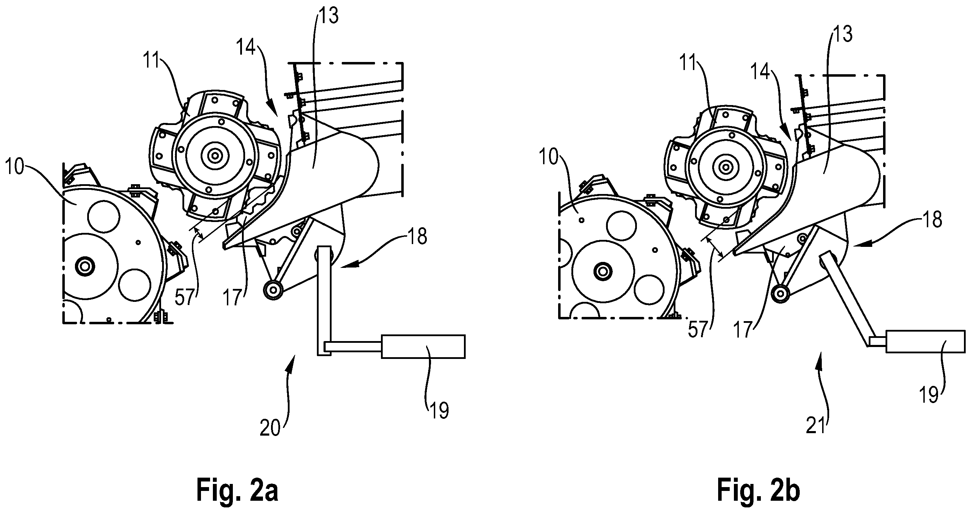

In Fig. 2 ist ein Abschnitt des Mähdreschers 1 mit der Dreschtrommel 10, der Zuführtrommel 11 und dem Einlaufkopfgehäuse 13 schematisch dargestellt. Weiterhin zeigt die Fig. 2 ein erfindungsgemäßes Trennelement 17, wobei das Trennelement 17 als Messer ausgebildet ist. Das Trennelement 17 ist in noch näher zu erläuternder Weise am Einlaufkopfgehäuse 13 schwenkbeweglich angeordnet und kann mittels einer noch näher zu erläuternden Verschwenkvorrichtung 18 und einem mit der Verschwenkvorrichtung 18 zusammenwirkenden Aktor 19 automatisch von einer ersten Position 20 hin zu einer zweiten Position 21 stufenlos verschwenkt werden. Fig. 2a zeigt das Trennelement 17 in der ersten Position 20, wobei das Trennelement 17 durch eine schlitzförmige Aussparung 22 an der Oberfläche des Einlaufkopfgehäuses 13 hin zu der Zuführtrommel 11 in den Erntegutstrom 8 eingeschwenkt ist. Hierbei können an der Zuführtrommel 11 Gegenschneiden vorgesehen sein, die das Trennelement 17 längsseitig umschließen und scherenartig mit dem Trennelement 17 zusammenwirken. Fig. 2b zeigt das Trennelement 17 in der zweiten Position 21, wobei das Trennelement 17 vollständig aus dem Erntegutstrom 8 herausgeschwenkt ist. In dieser zweiten Position 21 befindet sich das Trennelement 17 unterhalb einer der Zuführtrommel 11 zugewandten Oberfläche des Einlaufkopfgehäuses 13, sodass dieses nicht mit dem Erntegut in Berührung kommt und Verschleiß am Trennelement 17 vermieden wird. Der Abstand 57 des Trennelements 17 zur Zuführtrommel 11 ist in der ersten Position 20 kleiner als in der zweiten Position 21.

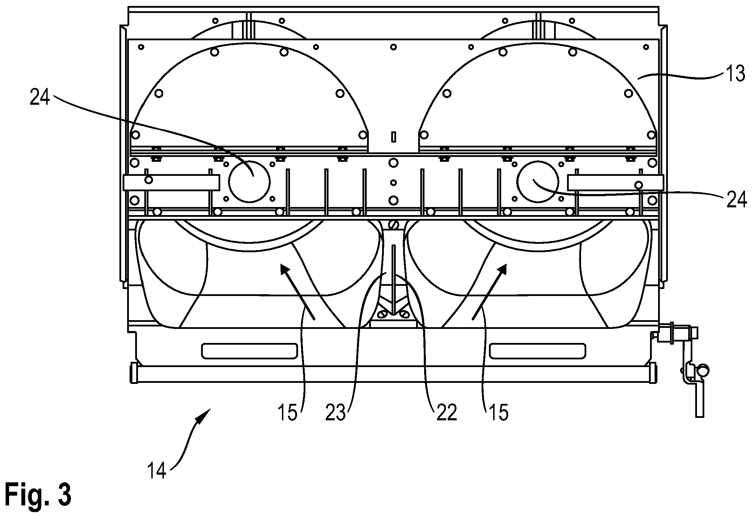

Fig. 3 zeigt das Einlaufkopfgehäuse 13 in einer schematischen Vorderansicht. Das Einlaufkopfgehäuse 13 formt den sich über die breite des jeweiligen Axialrotors 4 erstreckenden Einlaufbereich 14, der zum Zuführen des jeweiligen Teilstroms 15 hin zu dem jeweiligen Axialrotor 4 dient. Im Einlaufbereich 14 befindet sich mittig ein rampenförmiger Gehäuseabschnitt 23. Der rampenförmige Gehäuseabschnitt 23 weist ein im Wesentlichen konkaves Profil auf. Auf dem rampenförmigen Gehäuseabschnitt 23 ist die schlitzförmige Aussparung 22 vorgesehen, durch welche das Trennelement 17 zur Unterstützung einer Auftrennung des Erntegutstroms 8 in die zwei Teilströme 15 in den Erntegutstrom 8 einschwenkbar ist. Oberhalb des Einlaufbereichs 14 umfasst das Einlaufkopfgehäuse 13 zwei im Wesentlichen kreisrunde Aussparungen 24, wobei eine Aussparung 24 rechtsseitig und die weitere Aussparung 24 linksseitig von dem rampenförmigen Gehäuseabschnitt 23 sowie oberhalb des Einlaufbereichs 14 angeordnet sind und zur Lagerung der Axialrotoren 4 vorgesehen sind.

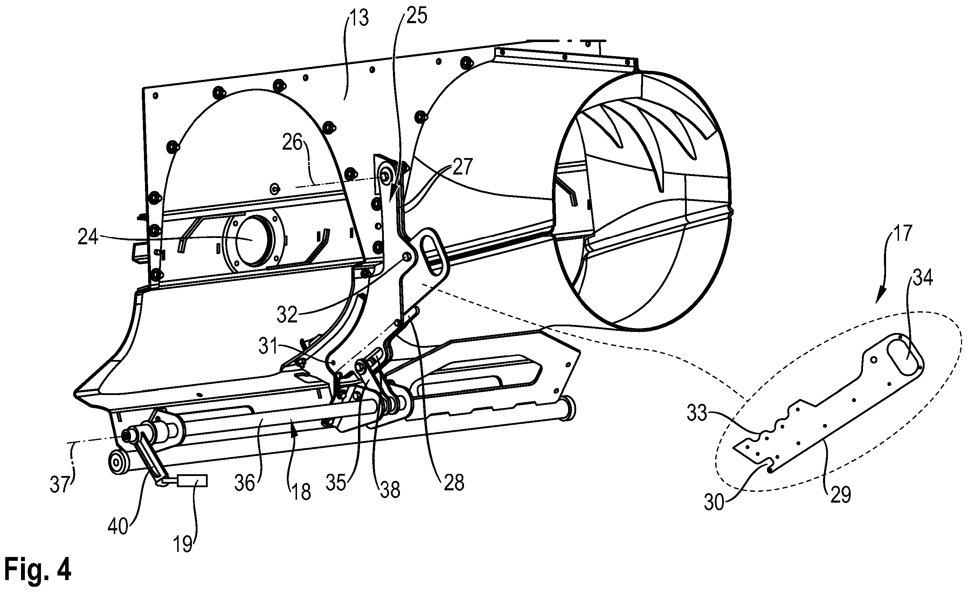

Fig. 4 zeigt eine schematische Ansicht der Rückseite des Einlaufkopfgehäuses 13 mit dem Trennelement 17 und der Verschwenkvorrichtung 18. Eine Haltevorrichtung 25 haltert das Trennelement 17, wobei die Haltevorrichtung 25 schwenkbeweglich um eine sich im Wesentlichen quer zur Vorwärtsfahrtrichtung FR des Mähdreschers 1 erstreckende Achse 26 rückseitig auf einer den Axialrotoren 4 zugewandten Seite des Einlaufkopfgehäuses 13 angeordnet ist.

Die Haltevorrichtung 25 umfasst zwei parallel und beabstandet zueinander angeordnete Seitenwände 27 die einen Zwischenraum formen, in dem das Trennelement 17 gehaltert ist. Die Haltevorrichtung 25 weist komplementär zu dem Trennelement 17 ausgebildete Abschnitte 31, 28 auf. Die komplementären Abschnitte 31, 28 ermöglichen ein einfaches Herauslösen bzw. Auswechseln des Trennelements 17 aus der Haltevorrichtung 25. Die komplementären Abschnitte 31, 28 umfassen eine Führungsschiene 28 entlang welcher das Trennelement 17 beim Herauslösen oder Einführen in die Haltevorrichtung 25 geführt wird und in einem in Fig. 4 dargestellten befestigten Zustand in der Haltevorrichtung 25 fixiert wird. Das Trennelement 17 weist untenseitig einen im Wesentlichen geradlinig ausgebildeten Abschnitt 29 auf, der an der Führungsschiene 28 im Betriebszustand anliegt und entlang welchen das Trennelement 17 beim Auswechseln entlanggleitet. Weiterhin umfasst das Trennelement 17 eine Aussparung 30, wobei die Aussparung 30 ein hier und vorzugsweise als Bolzen ausgebildetes an der Haltevorrichtung 25 befindliches Halterungselement 31 abschnittsweise formschlüssig umschließt, sobald das Trennelement 17 vollständig in seiner für den Betriebszustand vorgesehenen Position in der Haltevorrichtung 25 eingeführt ist. Im Betriebszustand des Trennelements 17 ist das Trennelement 17 ausschließlich mittels eines hier und vorzugsweise als Schraube ausgeführten Befestigungselements 32 gegen ein herauslösen aus der Haltevorrichtung 25 gesichert. In einer alternativen Ausgestaltung kann das Befestigungselement 32 ebenfalls als Bolzen, Splint oder ähnliches, leicht zu lösendes Befestigungselement 32 ausgeführt sein. Die Schneide 33 des Trennelements 17 ist geriffelt ausgeführt und in der in Fig. 4 dargestellten ersten Position 20 durch die Aussparung 22 im Einlaufbereich 14 in den Erntegutstrom 8 eingeschwenkt. Weiterhin weist das Trennelement 17 an einem einer Stirnseite zugewandten Ende eine als Griff 34 ausgebildete Aussparung auf. Die Aussparung 34 beschreibt im Wesentlichen die Form eines Ovals und ist zur einfachen Handhabung beim Auswechseln des Trennelements 17 vorgesehen.

Die Verschwenkvorrichtung 18 umfasst einen ersten Hebelarm 35, der verdrehfest auf einer Welle 36 angeordnet ist. Die Welle 36 ist auf einer sich quer zur Vorwärtsfahrtrichtung FR erstreckende Achse 37 drehbeweglich an der Rückseite des Einlaufkopfgehäuses 13 gelagert. An seinem der Welle 36 abgewandten Ende ist der erste Hebelarm 35 zum Verschwenken des Trennelements 17 an der Haltevorrichtung 25 angeordnet. Die Haltevorrichtung 25 weist hierfür eine längliche Aussparung 38 auf, in welcher der erste Hebelarm 35 beim Verschwenken geführt wird, um ein Verkeilen zu vermeiden. Durch eine Drehbewegung der Welle 36 ist mittels des ersten Hebelarms 35 und der schwenkbeweglich gelagerten Haltevorrichtung 25 das Trennelement 17 von der ersten Position 20 in die zweite Position 21 verschwenkbar und umgekehrt.

Die Welle 36 der Verschwenkvorrichtung 18 erstreckt sich ausgehend von dem ersten Hebelarm 35 hin zu einem einer Längsseite 39 des Mähdreschers 1 zugewandten Bereich. An dem der Längsseite 39 zugewandten Ende der Welle 36 ist der als doppeltwirkender Hydraulikzylinder ausgebildete Aktor 19 vorzugsweise mittels eines zweiten Hebelarms 40 derart an der Welle 36 angeordnet, sodass bei einer Betätigung des Aktors 19 die Welle 36 eine Drehbewegung um die Achse 37 ausführt und über den ersten Hebelarm 35 die Haltevorrichtung 25 mit dem Trennelement 17 verschwenkt. In einer alternativen Ausgestaltung kann der Aktor 18 ebenfalls als elektrischer Linearaktor ausgeführt sein.

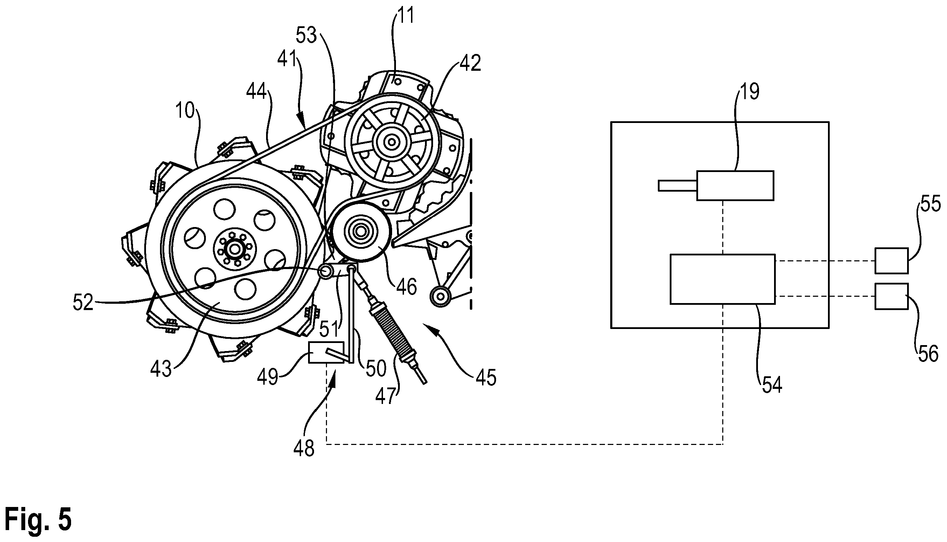

Fig. 5 zeigt einen Abschnitt des Mähdreschers 1 mit der Dreschtrommel 10 und der Zuführtrommel 11 in einer schematischen Seitenansicht. Ein Riementrieb 41 ist zum Antrieb der Zuführtrommel 11 vorgesehen. Hierfür befindet sich an einer Stirnseite der Zuführtrommel 11 eine erste Riemenscheibe 42 und an einer Stirnseite der Dreschtrommel 10 eine zweite Riemenscheibe 43. Ein Riemen 44 umspannt die erste und zweite Riemenscheibe 42, 43, sodass diese trieblich miteinander verbunden sind. Der Riemen 44 übertragt ein Antriebsdrehmoment von der Dreschtrommel 10 auf die Zuführtrommel 11. Die Dreschtrommel 10 wird mittels eines separaten und hier nicht näher erläuterten Antriebsmittels angetrieben. Im Leertrum des Riemens 44 ist eine Spannvorrichtung 45 angeordnet, um den Riemen 44 mit einer Spannung zu beaufschlagen. Die Spannvorrichtung 45 umfasst eine an dem Riemen 44 anliegende Spannrolle 46 und einen Spannzylinder 47, der die Spannrolle 46 mit einer definierten Kraft gegen den Riemen 44 drückt.

Bei einer zunehmenden an der Zuführtrommel 11 anliegenden Last, lässt die Spannung des Riemens 44 im Leertrum nach, wobei die Spannrolle 46 mittels des Spannzylinders 47 weiter in den Riemen 44 gedrückt wird, sodass der Riemen 44 zumindest im Leertrum fortlaufend mit einer im Wesentlichen gleichbleibenden Spannung beaufschlagt ist. Die Position der Spannrolle 46 verändert sich somit in Abhängigkeit eines Lastzustands der Zuführtrommel 11.

Der Spannvorrichtung 45 ist eine Sensoreinrichtung 48 zugeordnet, wobei die Sensoreinrichtung 48 zur Erfassung der Position der Spannrolle 46 eingerichtet und vorgesehen ist. Hierfür umfasst die Sensoreinrichtung 48 einen Winkelsensor 49 der mit einem beispielsweise als Seil oder Stab ausgebildeten Taster 50 die Position der Spannrolle 46 mittelbar oder unmittelbar erfasst. Im Ausführungsbeispiel ist die Spannrolle 46 mittels eines ersten Hebels 51 drehbeweglich um eine Achse 52 gelagert. Der Spannzylinder 47 steht mittels eines zweiten Hebels 53 mit der Spannrolle 46 in Wirkverbindung. Der zweite Hebel 53 ist ebenfalls drehbeweglich um die Achse 52 gelagert und verdrehfest an den zweiten Hebel 53 angeordnet. Zur Erfassung der Position der Spannrolle 46 ist der Taster 50 dem zweiten Hebel 53 zugeordnet. In einer alternativen Ausgestaltung kann der Taster 50 ebenfalls die Position des ersten Hebels 51 erfassen oder unmittelbar der Spannrolle 46 zugeordnet sein.

Ein von der Sensoreinrichtung 48 ermitteltes Positionssignal, welches den Lastzustand der Zuführtrommel 11 beschreibt bzw. proportional zu dem Lastzustand ist, wird an eine Steuerungseinrichtung 54 übertragen, wobei die Steuerungseinrichtung 54 zum Ansteuern des Aktors 19 eingerichtet und vorgesehen ist. Die Steuerungseinrichtung 54 steuert den Aktor 19 automatisch in Abhängigkeit des Positionssignals an. Hierfür ist in der Steuerungseinrichtung 54 ein Schwellwert 55 und ein Zeitintervall 56 gespeichert, wobei zusätzlich vorgesehen sein kann, dass der Fahrzeugführer den Schwellwert 55 und das Zeitintervall 56 manuell einstellt oder verändert. Hierbei ist ein Lastzustand, der größer als der Schwellwert 55 ist, als eine hohe an der Zuführtrommel 11 anliegende Last und ein Lastzustand, der niedriger bzw. kleiner als der Schwellwert ist, als eine niedrige an der Zuführtrommel 11 anliegende Last definiert. Sobald der Lastzustand bzw. das dem Lastzustand entsprechende Positionssignal den Schwellwert 55 über eine dem Zeitintervall 56 entsprechende Dauer überschreitet, steuert die Steuerungseinrichtung 54 den Aktor 19 derart an, sodass dieser das Trennelement 17 ausgehend von der zweiten Position 21 hin in die erste Position 21 verschwenkt. Unterschreitet das Positionssignal den Schwellwert 55 über eine dem Zeitintervall 56 entsprechende Dauer, steuert die Steuerungseinrichtung 54 den Aktor 19 derart an, sodass das Trennelement 17 ausgehend von der ersten Position 20 hin zu der zweiten Position 21 verschwenkt wird.

In einer alternativen Ausgestaltung kann auch der Lastzustand eines der anderen Gutbearbeitungsorgane 9, 10, 11, insbesondere ein Lastzustand der Beschleunigungstrommel 9, mittels einer bereits oben näher erläuterten Sensoreinrichtung 48 bestimmt werden. Zum Antrieb der Beschleunigungstrommel 9 ist analog zu der Zuführtrommel 11 ein weiterer Riementrieb vorgesehen, wobei die Beschleunigungstrommel 9 mittels eines hier nicht dargestellten Riemens trieblich mit der Dreschtrommel 10 verbunden ist. Eine Sensoreinrichtung 48 kann gleichermaßen wie bei der Zuführtrommel 11 ein lastzustandsabhängiges Positionssignal ermitteln, wobei das Positionssignal in der zuvor erläuterten Art und Weise zur Ansteuerung des Aktors 19 verwendet wird.

Zusätzlich oder alternativ zu der automatischen Ansteuerung des Aktors 19 kann eine manuelle Ansteuerung des Aktors 19 vorgesehen sein. Hierbei stehen dem Fahrzeugführer eine Auswahl an Steuervorgaben zur Verfügung, wobei die Auswahl die erste Position 20 und die zweite Position 21 umfassen. Die Steuerungseinrichtung 54 steuert den Aktor 19 entsprechend der Steuervorgabe an.

**Bezugszeichenliste:**

| | | | |
|---|---|---|---|
| 1 | Mähdrescher | 34 | Griff |
| 2 | Dreschwerk | 35 | Erster Hebelarm |
| 3 | Abscheidevorrichtung | 36 | Welle |
| 4 | Axialrotor | 37 | Achse |
| 5 | Frontseite | 38 | Längliche Aussparung |
| 6 | Fahrerkabine | 39 | Längsseite |
| 7 | Schrägförderer | 40 | Zweiter Hebelarm |
| 8 | Erntegutstrom | 41 | Riementrieb |
| 9 | Beschleunigungstrommel | 42 | Erste Riemenscheibe |
| 10 | Dreschtrommel | 43 | Zweite Riemenscheibe |
| 11 | Zuführtrommel | 44 | Riemen |
| 12 | Dreschkorb | 45 | Spannvorrichtung |
| 13 | Einlaufkopfgehäuse | 46 | Spannrolle |
| 14 | Einlaufbereich | 47 | Spannzylinder |
| 15 | Teilstrom | 48 | Sensoreinrichtung |
| 16 | Einlaufsegment | 49 | Winkelsensor |
| 17 | Trennelement | 50 | Taster |
| 18 | Verschwenkvorrichtung | 51 | Erster Hebel |
| 19 | Aktor | 52 | Achse |
| 20 | Erste Position | 53 | Zweiter Hebel |
| 21 | Zweite Position | 54 | Steuerungseinrichtung |
| 22 | Schlitzförmige Aussparung | 55 | Schwellwert |
| 23 | Rampenförmiger Gehäuseabschnitt | 56 | Zeitintervall |
| 24 | Kreisrunde Aussparung | 57 | Abstand |
| 25 | Haltevorrichtung | FR | Fahrtrichtung |
| 26 | Achse | | |
| 27 | Seitenwand | | |
| 28 | Führungsschiene | | |
| 29 | Geradliniger Abschnitt | | |
| 30 | Aussparung Trennelement | | |
| 31 | Halterungselement | | |
| 32 | Befestigungselements | | |
| 33 | Schneide | | |

## Patentansprüche

1. Selbstfahrender Mähdrescher (1) mit einer Abscheidevorrichtung (3), die zumindest ein Paar parallel nebeneinander angeordnete Axialrotoren (4) umfasst, und mit der Abscheidevorrichtung (3) vorgeordneten Gutbearbeitungsorganen (9-11), die zumindest eine Zuführtrommel (11) zum Zuführen eines Erntegutstroms (8) in die Abscheidevorrichtung (3) aufweisen,
wobei in einem der Abscheidevorrichtung (3) vorgeordneten Einlaufbereich (14) ein Trennelement (17), insbesondere Messer, zur Unterstützung einer Auftrennung des Erntegutstroms (8) in zwei Teilströme (15) schwenkbeweglich angeordnet ist,
**dadurch gekennzeichnet, dass**
ein Aktor (19) zum Verschwenken des Trennelements (17) vorgesehen ist,
wobei eine Steuerungseinrichtung (54) in Abhängigkeit eines Lastzustands zumindest eines der Gutbearbeitungsorgane (9-11) den Aktor (19) automatisch derart ansteuert,
sodass bei einer hohen an dem zumindest einen Gutbearbeitungsorgan (9-11) anliegenden Last sich das Trennelement (17) in einer ersten Position (20) und bei einer niedrigen an dem zumindest einen Gutbearbeitungsorgan (9-11) anliegenden Last sich das Trennelement (17) in einer zweiten Position (21) befindet,
wobei ein Abstand (57) des Trennelements (17) zur Zuführtrommel (11) in der ersten Position (20) kleiner als in der zweiten Position (21) ist.

2. Selbstfahrender Mähdrescher (1) nach Anspruch 1, **dadurch gekennzeichnet, dass** der Aktor (19) als doppeltwirkender Hydraulikzylinder ausgebildet ist.

3. Selbstfahrender Mähdrescher (1) nach einem der Ansprüche 1 bis 2, **dadurch**
**gekennzeichnet, dass** das Trennelement (17) von der ersten Position (20) hin zu der zweiten Position (21) stufenlos mittels des Aktors (19) verstellbar ist, wobei das Trennelement (17) in der ersten Position (20) zumindest teilweise in den Erntegutstrom (8) hineinragt und in der zweiten Position (21) vollständig aus dem Erntegutstrom (8) herausgeschwenkt ist.

4. Selbstfahrender Mähdrescher (1) nach einem der Ansprüche 1 bis 3, **dadurch**
**gekennzeichnet, dass** der Mähdrescher (1) einen Riementrieb (41) zum Antrieb des zumindest einen Gutbearbeitungsorgans (9-11) und eine Sensoreinrichtung (48) aufweist, wobei die Sensoreinrichtung (48) zum ermitteln des Lastzustands des zumindest einen Gutbearbeitungsorgans (9-11) in Abhängigkeit einer Riemenspannung vorgesehen ist, wobei vorzugsweise die Sensoreinrichtung (48) derart eingerichtet ist, sodass diese die Riemenspannung anhand einer Position eines an dem Riemen anliegenden Elements, insbesondere der Position einer an dem Riemen anliegenden Spannrolle (46) ermittelt.

5. Selbstfahrender Mähdrescher (1) nach einem der Ansprüche 1 bis 4, **dadurch**
**gekennzeichnet, dass** in der Steuerungseinrichtung (54) ein Schwellwert (55) und ein Zeitintervall (56) einstellbar und/oder voreingestellt sind,
wobei die Steuerungseinrichtung (54) den Aktor (19) derart ansteuert, sodass das Trennelement (17) ausgehend von der zweiten Position (21) in die erste Position (20) verschwenkt wird, sobald der Schwellwert (55) über eine dem Zeitintervall (56) entsprechenden Dauer überschritten wird,
und bei einem unterschreiten des Schwellwerts (55) über eine dem Zeitintervall (56) entsprechende Dauer das Trennelement (17) ausgehend von der ersten Position (20) in die zweite Position (21) verschwenkt wird.

6. Selbstfahrender Mähdrescher (1) nach einem der Ansprüche 1 bis 5, **dadurch gekennzeichnet, dass** der Aktor (19) manuell und automatisch ansteuerbar ist.

7. Selbstfahrender Mähdrescher (1) nach Anspruch 6, **dadurch gekennzeichnet, dass** zur manuellen Ansteuerung des Aktors (19) ein Fahrzeugführer eine Steuervorgabe vorgibt, wobei die Steuervorgabe vorzugsweise eine Auswahl zwischen der ersten Position (20) und der zweiten Position (21) umfasst.

8. Selbstfahrender Mähdrescher (1) nach einem der Ansprüche 1 bis 7, **dadurch**
**gekennzeichnet, dass** der Mähdrescher (1) eine Haltevorrichtung (25) und eine Verschwenkeinrichtung (18) aufweist, wobei die Haltevorrichtung (25) das Trennelement (17) haltert, wobei die Verschwenkvorrichtung (18) zum Verschwenken der Haltevorrichtung (25) eingerichtet ist und mit dem Aktor (19) zusammenwirkt.

9. Selbstfahrender Mähdrescher (1) nach Anspruch 8, **dadurch gekennzeichnet, dass** die Haltevorrichtung (25) und das Trennelement (17) abschnittsweise komplementär zueinander ausgebildet sind, wobei das Trennelement (17) mittels eines lösbaren Befestigungselements (32), insbesondere Schraube, Bolzen oder Splint, in der Haltevorrichtung (25) fixiert ist.

10. Selbstfahrender Mähdrescher (1) nach einem der Ansprüche 8 bis 9, **dadurch gekennzeichnet, dass** die Abscheidevorrichtung (3) ein Einlaufkopfgehäuse (13) aufweist und die Axialrotoren (4) mit einem ersten Ende abschnittsweise in das Einlaufkopfgehäuse (13) hineinragen, wobei die Haltevorrichtung (25) schwenkbeweglich an dem Einlaufkopfgehäuse (13) angeordnet ist.

11. Selbstfahrender Mähdrescher (1) nach einem der Ansprüche 8 bis 10, **dadurch**
**gekennzeichnet, dass** die Verschwenkvorrichtung (18) zumindest einen ersten Hebelarm (35) und eine Welle (36) umfasst, wobei der erste Hebelarm (35) verdrehfest auf der Welle (36) angeordnet ist und der erste Hebelarm (35) an seinem der Welle (36) abgewandten Ende an der Haltevorrichtung (25) angeordnet ist.

12. Selbstfahrender Mähdrescher (1) nach Anspruch 11, **dadurch gekennzeichnet, dass** sich die Welle (36) quer zu einer Längsseite (39) des Mähdreschers (1) erstreckt und der Aktor (19) in kraftübertragender Weise an einem der Längsseite (39) zugewandten Ende mit der Welle (36) in Wirkverbindung steht.

## Claims

1. A self-propelled combine harvester (1) with a separating device (3), which comprises at least one pair of axial rotors (4) disposed parallel to one another, and with material processing means (9-11) disposed in front of the separating device (3), which have at least one feed drum (11) for feeding a flow of harvested material (8) into the separating device (3),
wherein, in an inflow region (14) disposed in front of the separating device (3), a separating element (17), in particular a blade, is pivotably disposed in order to support a division of the flow of harvested material (8) into two partial flows (15),
**characterized in that**
an actuator (19) is provided for pivoting the separating element (17), wherein a control device (54) automatically controls the actuator (19) as a function of a load status of at least one of the material processing means (9-11) in a manner such that, in the case of a high load being applied to the at least one material processing means (9-11), the separating element (17) is located in a first position (20) and in the case of a low load being applied to the at least one material processing means (9-11), the separating element (17) is located in a second position (21),
wherein a distance (57) from the separating element (17) to the feed drum (11) in the first position (20) is smaller than in the second position (21).

2. The self-propelled combine harvester (1) according to claim 1, **characterized in that** the actuator (19) is constructed as a double-acting hydraulic cylinder.

3. The self-propelled combine harvester (1) according to one of claims 1 to 2, **characterized in that** the separating element (17) can be adjusted from the first position (20) to the second position (21) in a stepless manner by means of the actuator (19), wherein in the first position (20), the separating element (17) protrudes at least in part into the flow of harvested material (8), and in the second position (21), it is pivoted away completely out of the flow of harvested material (8).

4. The self-propelled combine harvester (1) according to one of claims 1 to 3, **characterized in that** the combine harvester (1) has a belt drive (41) for driving the at least one material processing means (9-11) and a sensor device (48), wherein the sensor device (48) is provided for determining the load status of the at least one material processing means (9-11) as a function of a belt tension, wherein preferably, the sensor device (48) is configured in a manner such that it determines the belt tension with the aid of a position of an element fitted on the belt, in particular the position of a tensioning roller (46) fitted on the belt.

5. The self-propelled combine harvester (1) according to one of claims 1 to 4, **characterized in that** a threshold value (55) and a time interval (56) can be set and/or are preset in the control device (54),
wherein the control device (54) controls the actuator (19) in a manner such that the separating element (17) is pivoted into the first position (20) starting from the second position (21) as soon as the threshold value (55) is exceeded over a period corresponding to the time interval (56),
and in the case in which the threshold value (55) is fallen short of over a period corresponding to the time interval (56), the separating element (17) is pivoted into the second position (21) starting from the first position (20).

6. The self-propelled combine harvester (1) according to one of claims 1 to 5, **characterized in that** the actuator (19) can be controlled manually and automatically.

7. The self-propelled combine harvester (1) according to claim 6, **characterized in that** for the manual control of the actuator (19), a vehicle driver specifies a control instruction, wherein preferably, the control instruction comprises a selection between the first position (20) and the second position (21).

8. The self-propelled combine harvester (1) according to one of claims 1 to 7, **characterized in that** the combine harvester (1) has a retaining device (25) and a pivoting device (18), wherein the retaining device (25) retains the separating element (17), wherein the pivoting device (18) is configured for pivoting the retaining device (25) and cooperates with the actuator (19).

9. The self-propelled combine harvester (1) according to claim 8, **characterized in that** the retaining device (25) and the separating element (17) are complementary to each other in sections, wherein the separating element (17) is fixed in the retaining device (25) by means of a detachable fastening element (32), in particular a screw, pin or split pin.

10. The self-propelled combine harvester (1) according to one of claims 8 to 9, **characterized in that** the separating device (3) has an inflow head housing (13) and the axial rotors (4) protrude into the inflow head housing (13) with sections of a first end thereof, wherein the retaining device (25) is pivotably disposed on the inflow head housing (13).

11. The self-propelled combine harvester (1) according to one of claims 8 to 10, **characterized in that** the pivoting device (18) comprises at least one first crank arm (35) and a shaft (36), wherein the first crank arm (35) is disposed on the shaft (36) in a torsion-proof manner and the end of the first crank arm (35) facing away from the shaft (36) is disposed on the retaining device (25).

12. The self-propelled combine harvester (1) according to claim 11, **characterized in that** the shaft (36) extends transversely to a longitudinal side of the combine harvester (1) and an end of the actuator (19) facing the longitudinal side (39) is operatively connected to the shaft (36) in a force-transmitting manner.

## Revendications

1. Moissonneuse-batteuse (1) automotrice comprenant un dispositif de séparation (3) qui comporte au moins une paire de rotors axiaux (4) disposés parallèlement l'un à côté de l'autre, et comprenant des organes de traitement de produit (9 à 11) qui sont placés en amont du dispositif de séparation (3) et présentent au moins un tambour d'alimentation (11) destiné à amener un flux de produit récolté (8),
dans laquelle il est prévu, dans une zone d'entrée (14) placée en amont du dispositif de séparation (3), un élément de division (17), notamment un couteau, qui est disposé avec possibilité de pivotement et est destiné à favoriser une séparation du flux de produit récolté (8) en deux flux partiels (15),
**caractérisée en ce que**
il est prévu un actionneur (19) destiné à faire pivoter l'élément de division (17),
un dispositif de commande (54) activant automatiquement l'actionneur (19) en fonction d'un état de charge d'au moins un des organes de traitement de produit (9 à 11), de manière à ce que, en cas de charge élevée appliquée à l'organe de traitement de produit (9 à 11), au nombre d'au moins un, l'élément de division (17) se trouve dans une première position (20), et en cas de faible charge appliquée à l'organe de traitement de produit (9 à 11), au nombre d'au moins un, l'élément de division (17) se trouve dans une deuxième position (21),
une distance (57) de l'élément de division (17) par rapport au tambour d'alimentation (11) étant plus faible dans la première position (20) que dans la deuxième position (21).

2. Moissonneuse-batteuse (1) automotrice selon la revendication 1, **caractérisée en ce que** l'actionneur (19) est réalisé sous forme de vérin hydraulique à double effet.

3. Moissonneuse-batteuse (1) automotrice selon une des revendications 1 à 2, **caractérisée en ce que** l'élément de division (17) peut être déplacé en continu à l'aide de l'actionneur (19), de la première position (20) à la deuxième position (21), sachant que dans la première position (20), l'élément de division (17) avance au moins en partie dans le flux de produit récolté (8), et dans la deuxième position (21), est retiré complètement, par pivotement, du flux de produit récolté (8).

4. Moissonneuse-batteuse (1) automotrice selon une des revendications 1 à 3, **caractérisée en ce que** la moissonneuse-batteuse (1) présente une transmission par courroie (41), destinée à l'entraînement de l'organe de traitement de produit (9 à 11), au nombre d'au moins un, et un dispositif à capteur (48), le dispositif à capteur (48) étant prévu pour déterminer l'état de charge de l'organe de traitement de produit (9 à 11), au nombre d'au moins un, en fonction d'une tension de courroie, le dispositif à capteur (48) étant de préférence conçu pour déterminer la tension de courroie à l'aide d'une position d'un élément appliqué contre la courroie, notamment de la position d'un rouleau de tension (46) appliqué contre la courroie.

5. Moissonneuse-batteuse (1) automotrice selon une des revendications 1 à 4, **caractérisée en ce que** dans le dispositif de commande (54), une valeur seuil (55) et un intervalle de temps (56) peuvent être réglés et/ou sont préréglés,
le dispositif de commande (54) activant l'actionneur (19) de manière à ce que l'élément de division (17) soit pivoté dans la première position (20) à partir de la deuxième position (21), dès que la valeur seuil (55) est dépassée pendant une durée correspondant à l'intervalle de temps (56),
et qu'en cas de passage en dessous de la valeur seuil (55) pendant une durée correspondant à l'intervalle de temps (56), l'élément de division (17) soit pivoté dans la deuxième position (21) à partir de la première position (20).

6. Moissonneuse-batteuse (1) automotrice selon une des revendications 1 à 5, **caractérisée en ce que** l'actionneur (19) peut être activé par voie manuelle et par voie automatique.

7. Moissonneuse-batteuse (1) automotrice selon la revendication 6, **caractérisée en ce que** pour l'activation manuelle de l'actionneur (19), un conducteur du véhicule donne une consigne de commande, la consigne de commande comprenant de préférence une sélection entre la première position (20) et la deuxième position (21).

8. Moissonneuse-batteuse (1) automotrice selon une des revendications 1 à 7, **caractérisée en ce que** la moissonneuse-batteuse (1) présente un dispositif de support (25) et un dispositif de pivotement (18), le dispositif de support (25) tenant l'élément de division (17), le dispositif de pivotement (18) étant agencé pour le pivotement du dispositif de support (25) et coopérant avec l'actionneur (19).

9. Moissonneuse-batteuse (1) automotrice selon la revendication 8, **caractérisée en ce que** le dispositif de support (25) et l'élément de division (17) sont réalisés localement de façon complémentaire l'un de l'autre, l'élément de division (17) étant fixé dans le dispositif de support (25) au moyen d'un élément de fixation (32) amovible, notamment d'une vis, d'un boulon ou d'une goupille.

10. Moissonneuse-batteuse (1) automotrice selon une des revendications 8 à 9, **caractérisée en ce que** le dispositif de séparation (3) présente un carter de tête d'entrée (13) et les rotors axiaux (4) avancent avec une première extrémité par portions dans le carter de tête d'entrée (13), le dispositif de support (25) étant disposé avec possibilité de pivotement sur le carter de tête d'entrée (13).

11. Moissonneuse-batteuse (1) automotrice selon une des revendications 8 à 10, **caractérisée en ce que** le dispositif de pivotement (18) comprend au moins un premier bras de levier (35) et un arbre (36), le premier bras de levier (35) étant disposé de manière solidaire en rotation sur l'arbre (36), et le premier bras de levier (35) étant disposé sur le dispositif de support (25) avec son extrémité opposée à l'arbre (36).

12. Moissonneuse-batteuse (1) automotrice selon la revendication 11, **caractérisée en ce que** l'arbre (36) s'étend transversalement à un grand côté (39) de la moissonneuse-batteuse (1), et l'actionneur (19) est en liaison fonctionnelle avec une extrémité de l'arbre (36) qui est tournée vers le grand côté (39), de manière à transmettre des forces.
